# EUROPEAN PATENT SPECIFICATION

(11) **EP 1 487 666 B1**
(45) Date of publication and mention of the grant of the patent: **04.05.2011**
(21) Application number: 03706654.5
(22) Date of filing: 04.03.2003
(51) Int. Cl.: B60P 1/64

(54) **LOADING DEVICE FOR HANDLING AN INTERCHANGEABLE PLATFORM**
LADEVORRICHTUNG ZUR HANDHABUNG EINER AUSTAUSCHBAREN PLATTFORM
DISPOSITIF DE CHARGEMENT PERMETTANT LA MANIPULATION D'UNE PLATE-FORME INTERCHANGEABLE

(30) Priority: 04.03.2002 FI 20020408; 20.08.2002 FI 20021506
(43) Date of publication of application: 22.12.2004
(73) Proprietor: Insinööritoimisto Sepalant Oy, 40740 Jyväskylä (FI)
(72) Inventor: Seppälä, Teijo, 40740 Jyväskylä (FI)
(74) Representative: Helke, Kimmo Kalervo
(86) International application number: PCT/FI2003/000156
(87) International publication number: WO 2003/074323

(56) References cited:
- WO-A1-88/06985
- WO-A1-90/14250
- US-A- 4 220 280

## Description

The present invention relates to a loading device for trucks, which includes interchangeable-platform devices, fitted to the chassis of the truck, for pulling an interchangeable platform onto the truck and for removing it from on top of the truck, and further including a cradle moveable in guides fitted to the frame of the loading device, an L-arm with a hook, pivoted to the cradle and driven by an operating device, and cradle transfer devices, which are attached at one end to the frame of the loading device and at the opposite end to the cradle, which the transfer device drives over the transfer length, which transfer device include
- a first hydraulic cylinder, which includes components that move in opposite directions, i.e. a piston rod and a cylinder, and which is attached by one component to one end of the said transfer device and
- second hydraulic cylinder devices, which include components that move in opposite directions, i.e. a piston rod and a cylinder, which is attached by one end to the second component of the first cylinder, and which is attached by the opposite component to the opposite end of the transfer device, and in which
- the first hydraulic cylinder and the second hydraulic cylinder devices are arranged to form two parts of the transfer device, one of which parts has an essentially shorter stroke than the other part, and in which they are together arranged to cover the entire transfer length.

The use of hook devices to transfer interchangeable platforms onto and off a truck is widely known. Such a hook device includes a first arm equipped with powerful hydraulic cylinders, which is pivoted at the rear of the truck and which can be turned backwards. At the end of this is a hook arm, which can be turned to some extent relative to the first arm. Such a construction is quite disadvantageous, due to the inexpedient direction of the pushing power at the start of the tipping. Due to this, many devices must be equipped with booster pushers, to give the main cylinder a sufficient lever arm.

The prior interchangeable-platform art is disclosed in US patent 3,159,295 and PCT publication WO - 88/06985. In the former, a cable is used to pull the platform onto the truck over a track of auxiliary rollers. This needs substantially less power than the aforementioned hook pulling device. The WO publication discloses a loading device, in which the cradle transfer device includes two opposing hydraulic cylinders, the first of which provides a slow, powerful movement and the second, together with a tackle mechanism, provides a rapid movement with less power. However, the solution has a construction that is difficult to implement.

In addition, various hook devices are known, which do not have a cradle moved on the chassis, but instead a hook arm that is essentially fixed to the front part of a tipping arm. In such an embodiment, when the interchangeable platform is being hooked from the rear of the truck, the tipping arm must be turned through more than 90 degrees. The operationally highest position of the device is reached when the tipping arm is at a position of 90 degrees relative to the chassis. The interchangeable platform is then nearly vertical, making it impossible to use it for transporting certain products, such as loose material.

Yet another interchangeable platform handling device is disclosed in FI utility model number 2637. In this, the cradle is moved by a combination of a hydraulic cylinder and a cable drive. By means of the block and tackle construction they form, the cradle is moved for a distance double the stroke of the hydraulic cylinder. The cradle comprises a tubular piece, through which the cylinders and cable are arranged to run. In addition, the cables are arranged to run over pulley wheels.

The device described above cannot be implemented within the framework of the present dimension regulations governing trucks and especially interchangeable platform devices arranged on their chassis. This firstly due partly to the fact that the diameter of the cable pulleys would have to be up to twenty times the thickness of the cable, to avoid bending the cable for sharp curve. There is no way to arrange pulleys of this order of size within the space available in the structures of the chassis. Secondly, the implementation of devices of the kind described is generally hampered by a lack of space.

In addition to the above drawbacks, the devices include a great deal of technology that is liable to faults and is easily dirtied, thus making it disadvantageous in terms of maintenance.

One more prior art has been presented in the international patent application publication WO 90/14250, disclosing all features of the preamble of claim 1.

The present invention is intended to create a new type of loading device for interchangeable platforms, which is well suited to moving for example standard interchangeable platforms, and which is simpler, of a lighter construction, and more durable than before. The characteristic features of the loading device according to the invention are stated in Claim 1. In the loading device according to the invention, the structural and operating heights remain quite low, though the construction is robust and durable.

One of the first significant advantages achieved with the aid of the device according to the invention is the fact that it, in its most advantageous form, it can be arranged on the chassis of a truck that as such conforms to standard dimensions. According to one preferred embodiment, the device according to the invention can be fitted to the chassis, without a separate tipping frame. According to a second preferred embodiment, it is also possible to implement the device with a tipping frame.

In the device according to the invention, hydraulic cylinders, which can be arranged in several different ways, are used as the transfer device of the cradle. According to one preferred embodiment, the cylinders are arranged to operate in such a way that there is little danger of them buckling. In addition, the piston rods of the cylinders are protected when the device is not being used. By means of the loading device according to the invention, a symmetrical loading and pulling action is achieved, by which means its construction is quite light in relation to the heavy loading.

The other characteristic features of the loading device according to the invention are stated in the accompanying Claims while the advantages achieved by using the invention are stated in greater detail in the description.

The loading device according to the invention, which is in no way restricted to the embodiments disclosed in the following, is examined in greater detail reference to the accompanying drawings, in which
- Figures 1a - 1c: show the operating stages of a first loading device according to the invention, when pulling an interchangeable platform onto a truck,
- Figures 2a - 2c: show the operating stages of a second loading device according to the invention, when pulling an interchangeable platform onto a truck,
- Figure 3: shows an angled side view of the loading device of Figure 1 when the tip raised,
- Figure 4: shows an angled side view of the loading device of Figure 1, when the tip lowered,
- Figure 5a: shows the hydraulic cylinders of the loading device according to the invention, when the cradle is at the front of the chassis,
- Figure 5b: shows the hydraulic cylinders of the loading device according to the invention, when the cradle is at the rear of the chassis,
- Figure 6: shows the L-arm of the loading device accord- ing to the invention, in different positions,
- Figure 7: shows a side view of the loading device according to the invention,
- Figure 8: shows a cross-section of Figure 7, along the line A-A,
- Figure 9: shows a cross-section of Figure 7, along the line B-B,
- Figure 10: shows a cross-section of Figure 7, along the line C-C and
- Figure 11: shows a cross-section of Figure 7, along the line D-D.

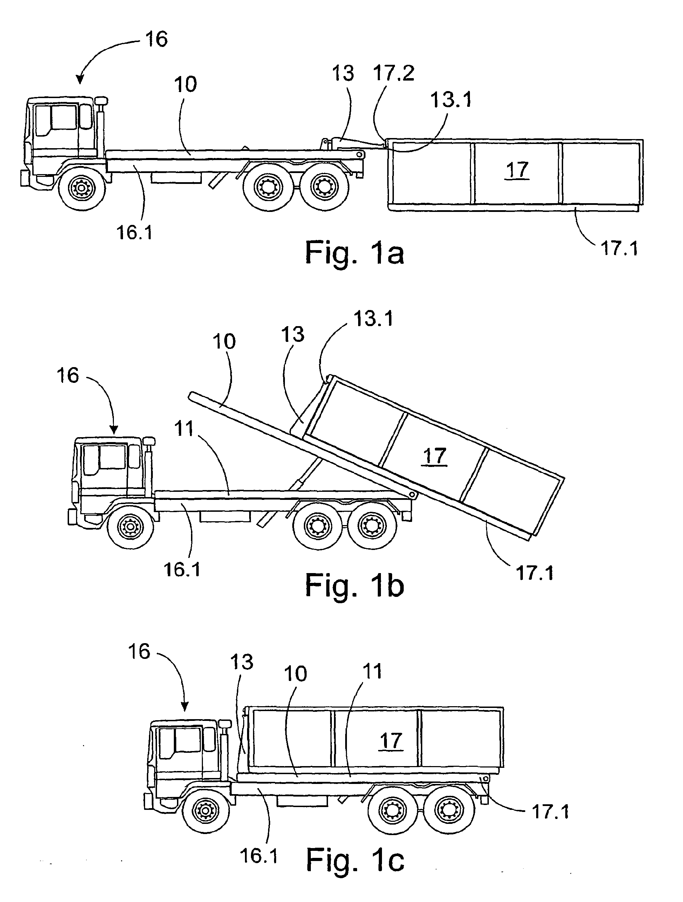

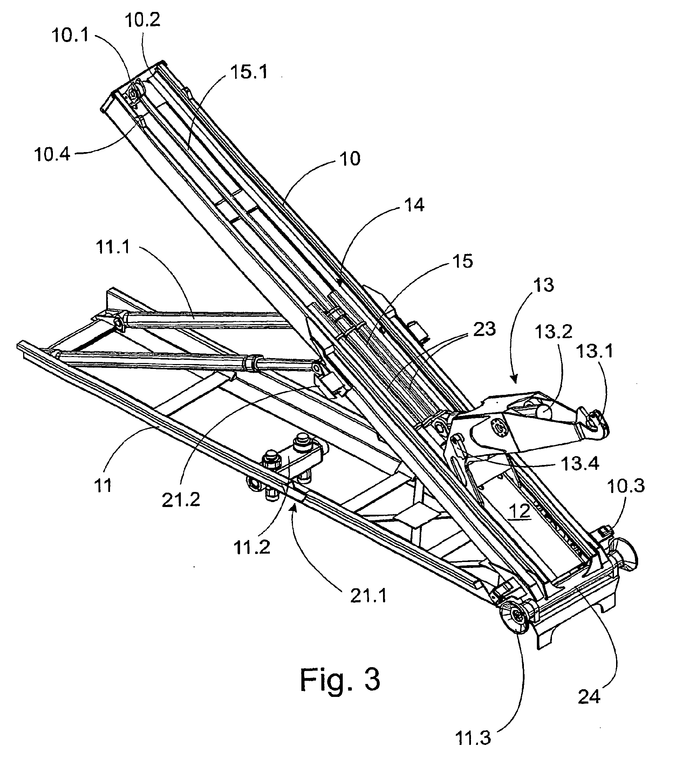

Figures 1a - 1c show a first example of the loading device of an interchangeable platform 17 and its various operating stages, when pulling the interchangeable platform 17 onto the chassis 16.1. Hereinafter, to the loading device for handling an interchangeable platform 17 will be generally referred to as the device. In the embodiment in question, the device preferably includes an interchangeable-platform device 17, arranged on the chassis 16.1 of a conventional truck 16 that is, as such, unmodified, for pulling an interchangeable platform 17 onto and off the truck 16, which operations can thus be understood as the handling of the interchangeable platform 17. In this case, the device has a tipping frame 10. Guides 10.2 (Figure 3), in connection with which is a cradle that can be moved by a transfer device 14 from end to end of the frame 10, and which form a track, are arranged for the tipping frame 10. An L-arm 13, at the end of which is a hook 13.1 or similar grab, is pivoted to the cradle. The hook 13.1 can also be attached by bearings to the end of the L-arm 13.

In Figure 1a, the cradle 12 has been moved to the rear end of the tipping frame 10. The L-arm 13 has been turned backwards to the level of the chassis 16.1 of the truck 16 and the truck 16 has been reversed in front of the interchangeable platform 17. The hook 13.1 of the L-arm 13 can then be placed through an attachment loop 17.1 arranged in the interchangeable platform 17. If necessary, the tipping action can be used, if the hook 13.1 should be lowered further.

The interchangeable platform 17 is lifted onto the tipping frame 10 by simultaneously tipping the frame and turning the L-arm 13 of the hook 13.1. The interchangeable platform 17 can then be pulled linearly at a suitable angle onto the tipping frame 10 by pulling the L-arm 13 using the cradle 12 which is described later (Figure 3) by transfer device 14.

In Figure 1b, the L-arm 13 is being moved on the tipping frame 10 towards the front end of the frame 10 while the interchangeable platform 17 has risen onto the tipping frame 10. At a suitable stage in the transfer, the L-arm is straightened, pulling the interchangeable platform 17 next to it. The cradle 12 is used to move the interchangeable platform 17 to the front end of the tipping frame 10.

In Figure 1c, the L-arm 13 has reached the front end of the tipping frame 10 (Figure 3) and the tipping frame 10 has been lowered. The interchangeable platform 17 is now entirely on top of the tipping frame 10.

The removal of the interchangeable platform 17 from on top of the truck 16 takes place in the reverse order. If necessary, the interchangeable platform 17 can also be moved linearly the whole way, for example, onto a trailer, or a suitable track.

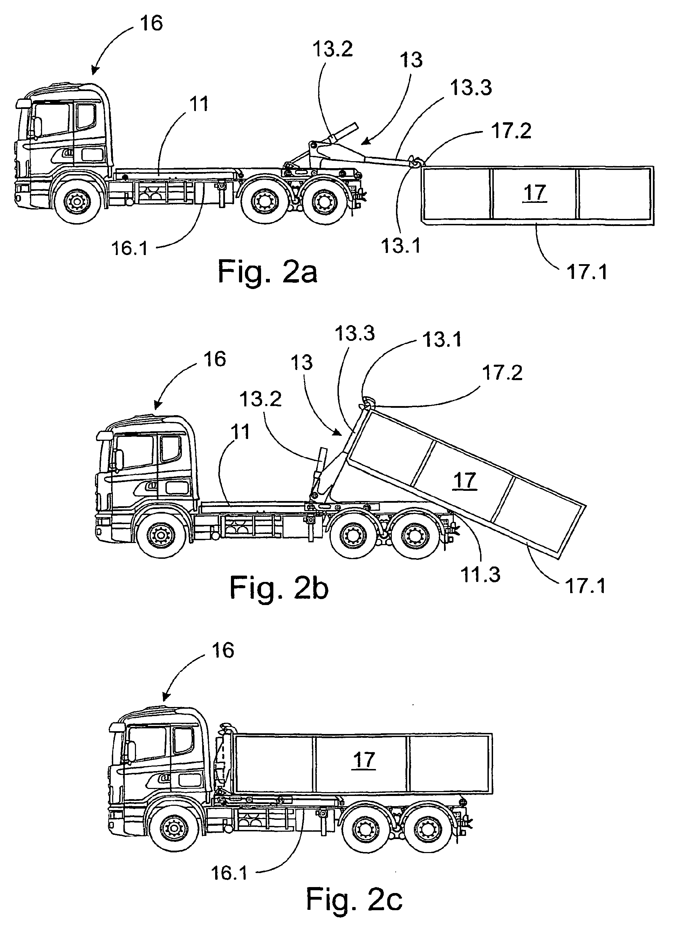

Figures 2a - 2c show the operating stages, corresponding to those shown in Figures 1a - 1c, of a second embodiment of the device according to the invention. Hereinafter, the same reference number are used to refer to operationally similar components. In the embodiment shown, it can be seen that the device according to the invention can also be implemented even without the actual tipping frame. In that case, the track formed in the guides 10.2 for the moveable cradle 12 is on the fixed frame of the device, which is in attached to the chassis 16.1 of the truck 16.

A telescopic extension arm 13.3 is now arranged in the L-arm 13. The use of the telescopic extension arm 13.3 gives the reaches required from the tipping frameless implementation, both backwards and upwards. With the aid of the extension arm 13.3, the front end of the interchangeable platform 17 to be lifted onto the chassis 16.1 can be lifted to a sufficient height, allowing even the lower edge of the front of the platform 17 to be easily skidded onto the frame 11.

In Figure 2a, the cradle 12 that includes the L-arm 13 is moved to the rear end of the device, in a similar manner to that in Figure 1a. The operating device, which is a hydraulic cylinder 13.2, that drives the turning of the L-arm 13 is now also visible. The telescopic extension 13.3 of the L-arm 13 is extended, giving the arm a sufficient reach to be able bring the lower edge too of the front of the interchangeable platform 17 onto the frame 11, without tipping.

In Figure 2b, the platform 17 is being pulled onto the frame 11. The L-arm 13 is turned by the hydraulic cylinder 13.2 to its vertical position and it is moved forwards on the cradle 12, to be described in greater detail, towards the front end of the frame 11. At the same time, the telescopic extension 13.3 of the L-arm can be retracted.

In Figure 2c, the interchangeable platform 17 has already been pulled entirely onto the frame 11. The telescopic extension 13.3 of the L-arm 13 is also completely retracted.

Despite the telescopic extension 13.3 of the L-arm 13 and the vertical reach given by it when the platform 17 is being pulled onto the frame 11, which is best shown in Figure 2b, even the maximum working height of the device according to the invention is nevertheless considerably lower that in the prior art. This permits the device according to the invention to be used, for example, in roofed spaces.

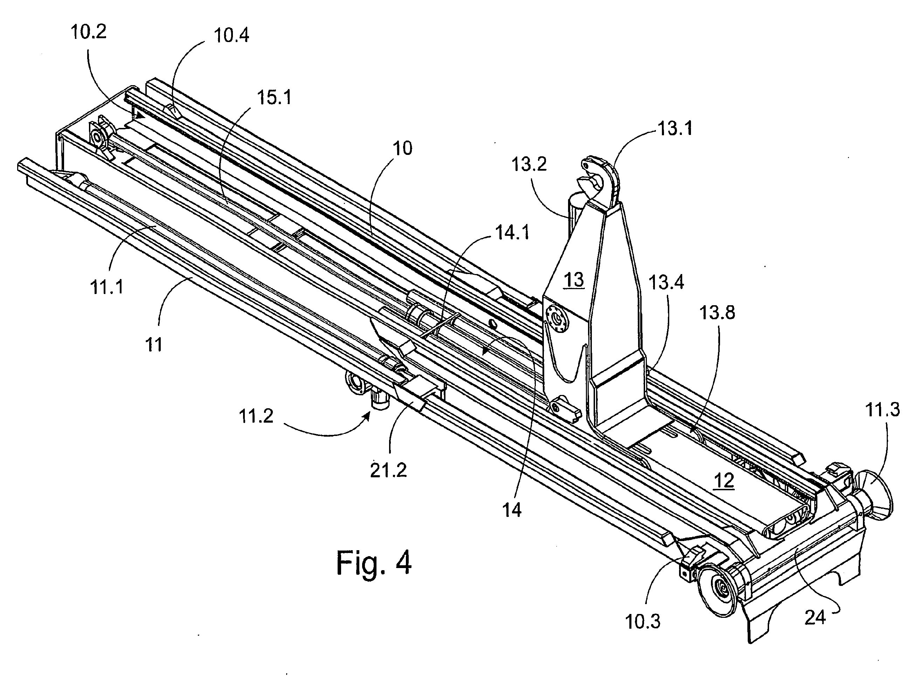

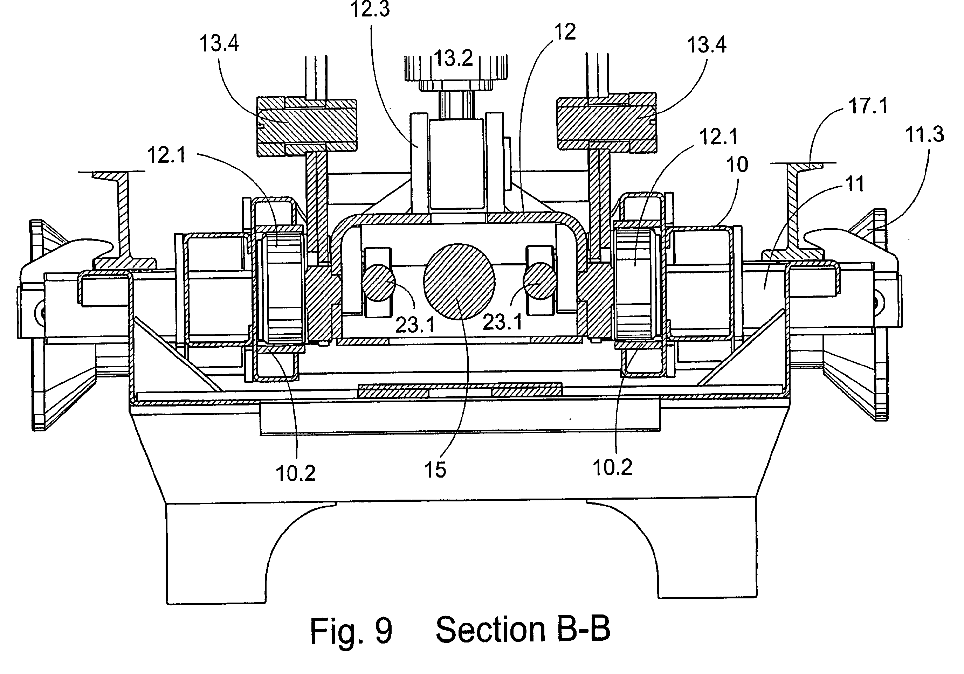

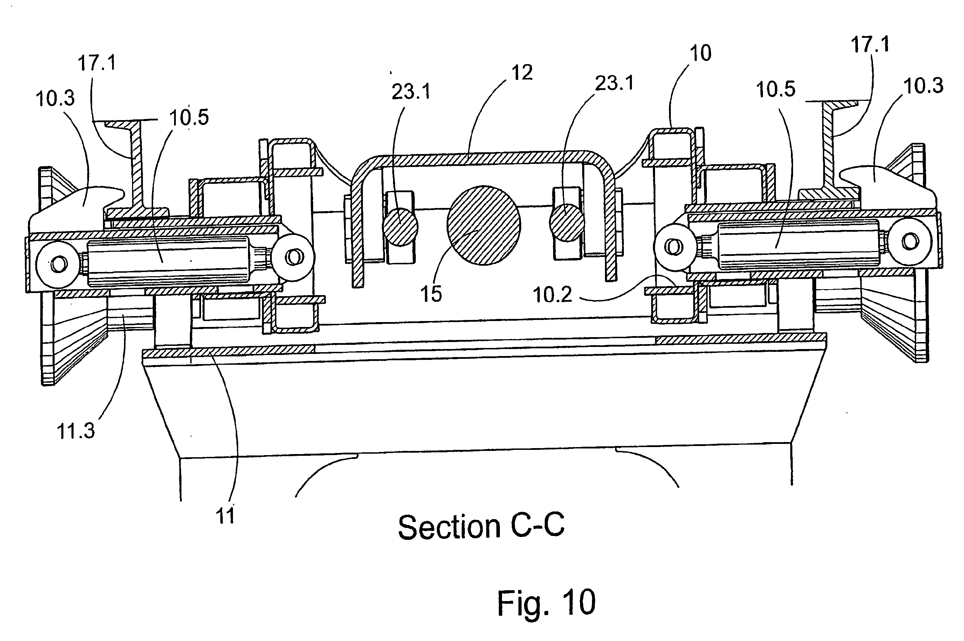

Figures 3 and 4 show in greater detail one embodiment of the device according to the invention, equipped with a tipping frame 10, 11. Thus, the loading device is attached to the chassis 16.1 of the truck 16, its frame component being formed in this case of an auxiliary frame 11 attached to the chassis 16.1 of the truck 16 and of a tipping frame 10 connected to it by a pivot shaft at its rear end. The tipping frame 10 can be tipped with the aid of an operating device 11.1, 11.2, for example, to an angle of about 60 degrees. The auxiliary frame 11 and the tipping frame 10 have counter-pieces 21.1, 21.2 for supporting the tipping frame 10 on the auxiliary frame 11. The dumping shaft 24 of the tipping frame 11 is rigid while the lower part of the tipping frame 11 is stiffened with a box structure. There are stiffening beams (Figures 9 and 10) at the sides between the dumping shaft 24 and the tipping frame 11.

The tipping frame 10 includes a cradle 12 with a closed cross-sectional profile, for which a track is arranged in the frame 10, to allow it to move backwards and forwards on the frame 10. The track is formed of guides 10.2, which are on the opposing inner surfaces of the frame beams that form the tipping frame. The guides 10.2 have a C-profile that opens to the inside of the beams, as will be described later in greater detail.

The L-arm 13 is forked at its lower end and is pivoted at both sides to essentially the centre of the cradle 12 by a pivot joint 13.8 (Figure 4). The hook 13.1 arranged in connection with the upper part of the L-arm 13 can be brought considerably lower by using the transfer device 14 to run the cradle 12 to the very rear of the frame 10 and tipping the tipping frame 10 upwards, so that the hook 13.1 drops to its lowest position. The transfer devices 14 driving the cradle 12 are set to run through the closed cradle 12.

The transfer devices 14 of the loading device according to the invention are formed of a first hydraulic cylinder 15 and a pair of hydraulic cylinders 23. These permit to implement the transfer device 14 with several different constructions. Each hydraulic cylinder 15, 23 of the transfer device 14 includes two components that move in opposite directions to each other, and which are, as is known, the piston rod 15.1, 23.1 of the cylinder and the cylinder component 15, 23.

In one preferred embodiment of the transfer device 14 shown in Figures 3 - 11, the first cylinder 15 is attached by its one component, which in this case is its piston rod 15.1, to the end of the transfer device 14, which is now the loop 10.1 at the front end of the tipping frame 10.

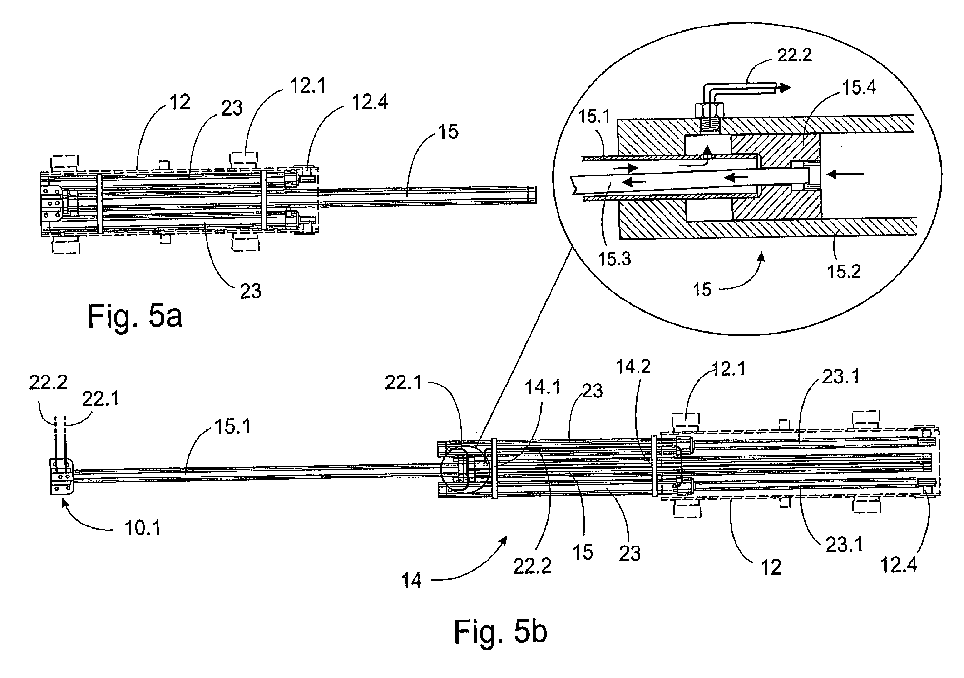

The pair of hydraulic cylinders comprises two hydraulic cylinders 23. Both of these cylinders are, in the embodiment shown, attached by one part, which in this case is the cylinder component 23 of the cylinders, to the second part of the first hydraulic cylinder 15, which is its cylinder component 15. The attachment is symmetrical, so that the cylinders 23 forming the pair of hydraulic cylinders lie on both sides of the first hydraulic cylinder 15. Each of the cylinders 23 forming the pair of hydraulic cylinders are attached by their opposing part, i.e. now by their piston rods 23.1, operationally to the opposite end 12.4 (Figures 5a and 5b) of the transfer device 14. In this embodiment, this opposite end is the edge facing the rear end of the cradle 12. In other words, the attachment points of the transfer device 14 are its operational ends 10.1, 12.4.

Further, in the transfer device 14 according to the invention, the first hydraulic cylinder 15 and the pair of hydraulic cylinders 23 form two parts of the transfer device 14. One of these parts, which in the case according to the embodiment is thus the pair of hydraulic cylinders 23, has an essentially shorter stroke than that of the other part, i.e. the first hydraulic cylinder 15. Thus, the arrangement of the hydraulic cylinders 15, 23 forming the transfer device 14 covers the length of the guides 10.2 of the cradle 12, reduced by the length of the cradle 12. The transfer device 14 essentially covers the entire transfer length.

The tipping operating equipment of the tipping frame 10 includes auxiliary cylinders 11.2 attached by their piston rods to the tipping frame 10, their cylinder components being pivoted to the chassis 16.1 of the truck 16. In addition, the operating equipment includes longer cylinders 11.1 pivoted from their cylinder components to the front end of the auxiliary frame 11. The piston rods of the longer cylinders 11.1 are pivoted at more or less halfway along the tipping frame 10. Thus, the cylinder pack forming the transfer device 14 is more or less at this pivot point, when the cradle 12 is at the rear end of the frame 10.

Because the longer tipping cylinders 11.1 are horizontal when the tipping frame 10 is in the lowered position, the auxiliary cylinders 11.1 provide them with the force arm needed at the start of the raising of the tipping frame 10. As such, even a small lifting of the tipping frame 10 by the auxiliary cylinders 11.2 will be enough for the tipping cylinders 11.1 to reach a suitable angle to begin the raising.

According to one preferred embodiment, the tipping cylinders 11.1 are preferably arranged to be dual-acting. Thus, besides the traditional lifting action of the tipping frame 10, the cylinders 11.1 can also be used to lower the frame 10. This significantly improves the working speed of the device, especially after moving the interchangeable platform 17 away, or particularly if the interchangeable platform 17 is too lightly loaded to cause the tipping to be lowered by its weight. The longer tipping cylinders 11.1 are single rodded, which also accelerates their movement.

Such a tipping arrangement is also possible, in which the tipping frame 10 is raised by telescopic cylinders that are, as such, conventional, and which can be set in places corresponding to the pair of cylinders 11.2 in Figures 3 and 4. In this case, the long cylinders 11.1 at the sides of the tipping frame 10, which are only used to accelerate the lowering of the tipping frame 10, can be substantially smaller.

Figures 5a and 5b show the transfer device 14 according to the embodiment in its extreme positions. In Figure 5a, the transfer device 14 is in a position such that the cradle 12 attached to it is at the front end of the frame 10 of the loading device. The piston rods 15.1, 23.1 of the hydraulic cylinders 15, 23 are then advantageously protected inside the cylinders 15, 23. The figures also show the location of the carrier rollers 12.1 at the sides of the cradle 12, which will be examined in greater detail later.

In Figure 5b, the cradle 12 is at the rear end of the frame 10 of the loading device. The piston rod 15.1 of the first long cylinder 15 has in that case been pushed out of the cylinder 15. As a result, the cradle 12 has moved from the front end of the frame 10 to a short distance from the rear end of the frame 10. This distance from the rear end is created by using a pair of cylinders 23 with a shorter stroke, attached symmetrically to the first cylinder 15, and with their piston rods 23.1 thus attached to the rear end of the cradle 12.

Figure 5b also shows the hydraulic fluid channels 22.1, 22.2, which bring operating power to the cylinders 15, 23. The first cylinder 15 can be advantageously arranged from a hydraulic cylinder that is, as such, known, and which has a piston rod 15.1 with a hollow construction. The piston rod 15.1 can then, in connection with hoses set inside it, be used to arrange the input and return lines 22.1, 22.2 of the hydraulic fluids. The end of the lines 22.1, 22.2 are then at the end of the piston rod 15.1 of the first cylinder 15.

The inset in Figure 5b shows an example of such an implementation. A hose 15.3, which acts as the line 22.1, is arranged in the hollow piston rod 15.1. The space between the jacket of the hose 15.3 and the piston rod 15.1 acts as a second line 22.2.

The hollow piston rod 15.1 is attached to a piston 15.4. The piston 15.4 has an axial hole, through which the line 22.1 formed by the hose 15.3 is led to the other side of the piston 15.4. A hole is machined in the foot of the piston rod 15.1 and the cylinder component 15.2 of the first hydraulic cylinder, a connection being fitted to the hole, to continue the line 22.2 to the pair of hydraulic cylinders 23. There is a corresponding arrangement at the opposite end of the first cylinder 15. Such an arrangement reduces the number of external lines and thus helps to simplify bringing the hydraulic fluids to, and leading them from the cylinders 15, 23.

In the embodiment described, one of the hydraulic fluid lines 22.1 is connected to the cylinders 15, 23 in such a way that the force brought through it is used to push the piston rods 15.1, 23.1 of the first cylinder 15 and the cylinder pair 23 out of the cylinders 15, 23, i.e. to move the cradle 12 from the front end to the rear end of the frame 10. The other of the lines 22.2 is correspondingly connected to the cylinders 15, 23 in such a way that the force brought through it is used to pull the piston rods 15.1, 23.1 of the first cylinder 15 and the pair of cylinders 23 into the cylinders 15, 23. In these operating modes, when one of the lines 22.1, 22.2 acts to bring driving power to the cylinders 15, 23, the other of the lines 22.2, 22.1 acts as the return line for the fluid and correspondingly vice versa. Other types of hydraulic connection will also be possible for one versed in the art.

The first cylinder 15 and the pair of hydraulic cylinders 23 are connected by their cylinder components 15, 23 to each other with the aid of two flanges 14.1, 14.2. Openings are arranged in the flanges 14.1, 14.2 for the cylinder components of the cylinders 15, 23, to which they are then firmly welded.

As can be ascertained from Figures 3 - 5, when the interchangeable platform 17 is being pulled onto the frame 10, the working direction of the cylinders 15, 23 is arranged to pull and correspondingly, when the platform 17 is being removed from the frame 10 it is arranged to push. This significantly reduces the possibility of buckling in the cylinders 15, 23, particularly precisely in the first long cylinder 15. In addition, special buckling supports (not shown) can be arranged in the frame 10 for the first cylinder 15, which support the piston rod 15.1 when it is out of the cylinder component 15.

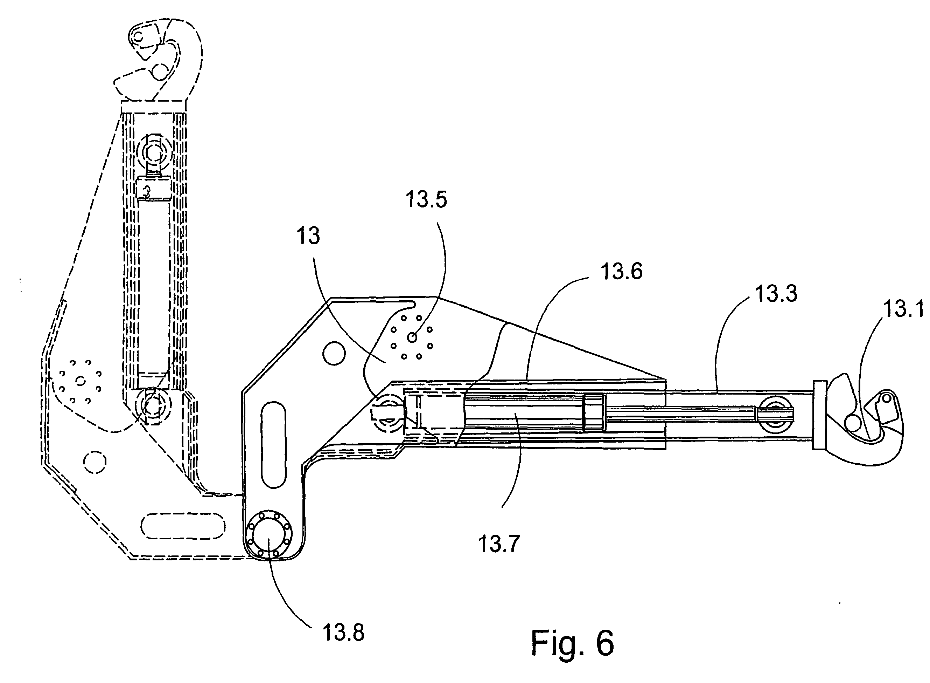

Figure 6 shows one example of the L-arm 13 in its two different positions. The broken lines show the L-arm 13 in the vertical position, in which it is, for example, when the interchangeable platform 17 is being pulled onto, or pushed off the frame 10, or when it is at the front end of frame 10. The L-arm 13 is pivoted to the cradle 12 at its lower end fork. The pivot point 13.8 is roughly in the middle of the cradle 12. In the vertical position, there is a pivot point 13.5 in the middle of the L-arm 13 to which the operating device of the L-arm 13 i.e. for example, a hydraulic cylinder (13.2, Figure 4) is attached. In the pivot point 13.5 the cylinder 13.2 is attached near to its half of the cylinder part.

Further, the L-arm 13 shown, also has a telescopic extension arm 13.3, which permits the invention to be implemented without a tipping frame. An implementation without an extension arm is also possible. The extension arm 13.3 is fitted tightly into the internal space 13.6 of the basic frame of the L-arm 13. To implement the telescoping function, an operating device, such as, for example, a hydraulic cylinder 13.7 is arranged inside the extension arm 13.3. The end of the piston rod of the cylinder 13.7 is attached to the extension arm 13.3 while the cylinder component is attached to the basic structure of the actual L-arm 13.

The outer surface of the extension arm 13.3 and the inner surface 13.6 of the L-arm 13 can be surfaced with a low-friction substance, to facilitate movement between them. One example of such a low-friction and durable substance is PTFE plastic.

At the end of the extension arm 13.3 of the L-arm 13, there is a hook 13.1 of a type that is, as such, known, which can be advantageously attached to the loop 17.2 fitted to the interchangeable platform 17, without the driver even having to leave the cab of the truck 16. The hook 13.1 can also be advantageously detached by means of a small turning movement of the L-arm 13.

As can be seen from Figure 6, the L-arm 13 with the extension arm 13.3 retracted inside it is a quite low structure. Further, even with the extension arm 13.3 extended, the structure of the L-arm 13 remains much lower than, for example, interchangeable platform devices according to the prior art.

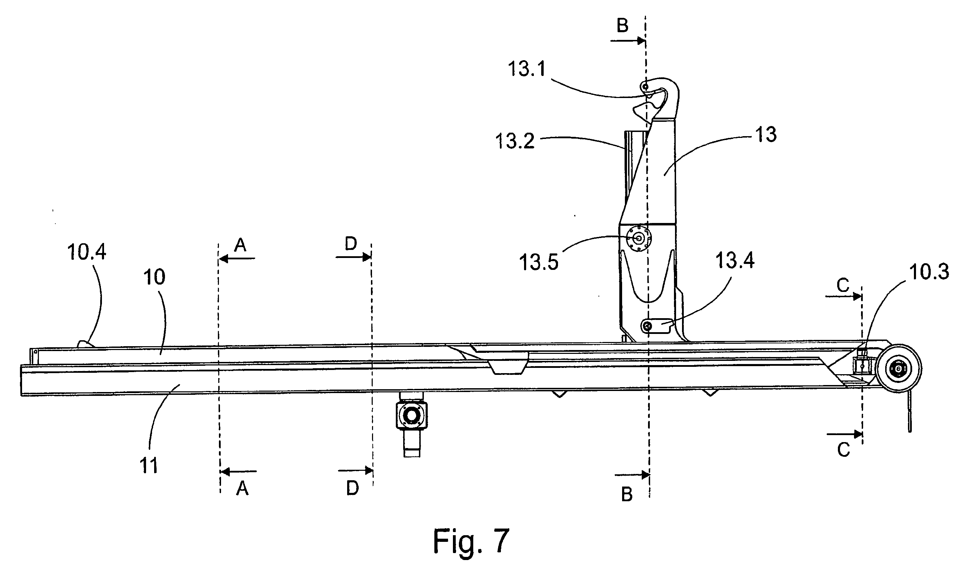

Figure 7 shows a side view of the loading device. At the front end of the frame 10, 11 of the interchangeable platform device, there are elements, such as protrusions 10.4, to hold the L-arm 13 and the interchangeable platform 17 in its hook 13.1 in place. Correspondingly, there are counter elements in the lower part of the L-arm 13, such as a spring-loaded catch mechanism 13.4, to hold the L-arm in place at the front end of the frame 10.

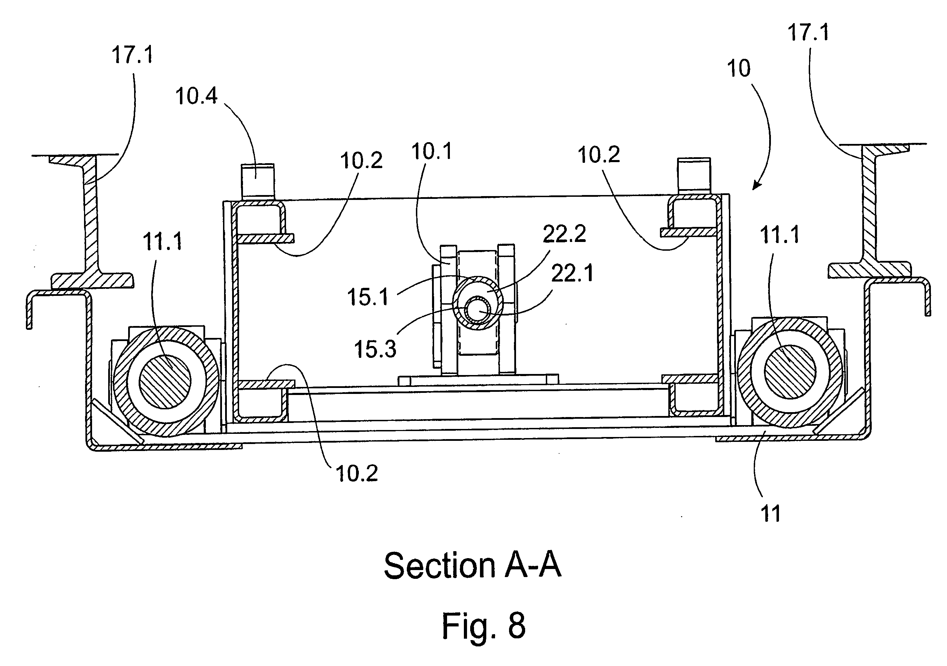

Figures 8 - 11 shows cross-sections of the device according to the invention, along the cross-section lines shown in Figure 7.

Figure 8 shows the construction of the piston rod 15.1 of the first hydraulic cylinder 15. As already stated earlier, the piston rod 15.1 can be hollow, comprising two channels 22.1, 22.2 for leading hydraulic fluid to the cylinders 15, 23 and for leading it away. One of the channels 22.1 is formed by a hose 15.3 fitted inside the piston rod 15.1. The guides 10.2 of the cradle 12 are open to the inside of the beams forming the tipping frame 10, between which the cradle 12 is set. When the interchangeable platform 17 is pulled onto the frame 10, the guide rails 17.1 underneath it are supported against the fixed auxiliary frame 11.

Figure 9 shows a cross-section along line B-B. It shows the cylinders 15, 23 running through the closed cradle 12, as well as the support for the cradle 12 on the guides 10.2 forming the track for it. Further, it shows the attachment of the pair of hydraulic cylinders 23 by their piston rods 23.1 to the pins 12.4 (Figures 5a and 5b) arranged at the rear end of the cradle 12. The carrier rollers 12.1 of the cradle 12 move in the guides 10.2 forming the track to the tipping frame 10. In the cradle 12, there can be, for example, four rollers 12.1 set on shafts at the sides of the cradle 12, as shown in Figures 5a and 5b. The rollers 12.1 are dimensioned to precisely fit the guides 10.2 forming the track, thus ensuring a straight and easy path for the cradle 12 between the guides 10.2. At the sides of the tipping frame 10, there are conventional auxiliary rollers 11.3, for rolling the interchangeable platform 17 along the tipping frame 10.

The operating device of the L-arm 13, i.e. the hydraulic cylinder 13.2 that turns it between the horizontal and vertical positions, is pivoted by its piston rod to a point 12.3 arranged in the cradle 12. The cylinder component of the cylinder 13.2 is attached near to its centre to a pivot point 13.5 (Figure 6) arranged in the L-arm 13. Thus, the cylinder component is advantageously almost entirely protected inside the basic construction of the L-arm 13.

Figure 10 shows a cross-section along line C-C. The interchangeable platform 17 is locked to the frame 10 by locking jaws 10.3, which grip the corner of the guide rails 17.1 beneath the platform 17. An operating device, in this case the hydraulic cylinder 10.5, is arranged for the locking jaws 10.3.

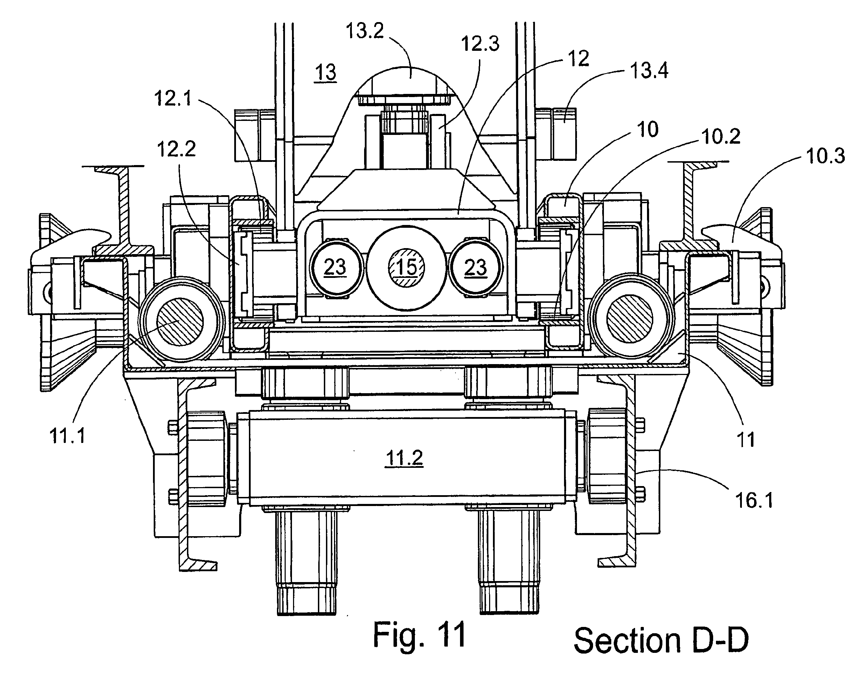

Figure 11 shows a cross-section along line D-D. In addition to the rollers 12.1, the cradle 12 includes sliding elements 12.2, which are made of some low-friction, highly wear-resistant material. They can be attached, for example, in connection with the rollers 12.1, before or after them. The sliding elements 12.2 are dimensioned so that they are the same height as the inner surface of the guide 10.2 and they extend essentially to at least the same level or slightly wider than the shaft-mounted carrier rollers 12.1 of the cradle 12. The sliding elements 12.2 correspond to the guides 10.2 of the frame 10, thus allowing the rollers 12.1 to rotate relatively freely along the track. The use of the sliding elements 12.2 ensures the particularly smooth movement of the cradle on the guide track 10.2.

In the embodiment with a tipping frame, the device thus includes a group of hydraulic cylinders 11.1, 11.2, for raising and lowering the tipping frame 10. There may be auxiliary cylinders 11.2 between the chassis beams 16.1 of the truck 16, which are used to start the raising of the tipping frame 10 from the lowered position of the tip. The auxiliary cylinders 11.2 form an, as such, conventional two-cylinder centre tip and are connected to each other using a rigid casing structure. The casing structure is pivoted to the chassis 16.1 of the truck 16.

The hydraulic pipes and hoses of the device according to the invention can be advantageously arranged to be as well encased as possible inside the frame beams 10, 11. Hydraulic hoses that must move can be protected with an, as such, known spiral reinforcement, to prevent wear when they are possible rubbed by the device. In addition, slots or similar can be arranged in the device, such as in the cradle 12, to prevent the hydraulic hoses from being bent too sharply.

As already stated above, the device according to the invention can be implemented using several different transfer device constructions. A second possible embodiment of the transfer device is one in which the first hydraulic cylinder 15 has the shorter stroke. The arrangement of the cylinders 15, 23 relative to each other can correspond to that in the embodiment disclosed above, but in that case the directions in which their piston rods push out are reversed.

According to a third embodiment, the ends of the piston rods 15.1, 23.1 of the hydraulic cylinders 15, 23 can be joined to each other. The first cylinder of the cylinder pack joined together at the ends of their piston rods, which in this case also has a longer stroke, is attached to the front end of the frame 10 of the device at its cylinder component 15 end. Correspondingly, the pair of hydraulic cylinders 23 is then attached by their cylinder components 23 to the front end of the cradle 12. In this case, the first cylinder and the pair of cylinders operate in opposite directions.

According to yet a fourth embodiment, the first cylinder 15 can be arranged in a manner corresponding to that in the third embodiment. Now the pair of hydraulic cylinders 23 is attached at their cylinder component 23 ends to a bar arranged at the piston rod 15.1 end of the first cylinder 15, which has a longer stroke. In this embodiment, the ends of the piston rods 23.1 of the pair of hydraulic cylinders 23 are attached to the front end of the cradle 12. The first cylinder 15 and the pair of cylinders 23 also operate in opposite directions. In the third and fourth embodiments, the piston rods 23.1 of the pair of hydraulic cylinders 23 remain visible when the cradle 12 is at the front end of the frame 10.

The device according to the invention is preferably arranged on the chassis 16.1 of a truck 16 that is, as such, standard. The most preferred way to arrange the transfer device 14 for different lengths of chassis is by using cylinders 15, 23 of standard dimensions. Thus, the strokes of the cylinders 15, 23 can be adjusted, for example, by using sleeve pieces set around the piston rods 15.1, 23.1 inside the cylinder components 15, 23. This achieves particular benefits in the assembly and serviceability of the device, as there is then no need to maintain a special stock of cylinders of different sizes for different chassis lengths.

According to yet another preferred embodiment, the loading device can be integrated in a fixed platform fitted to the chassis of the truck. This permits a payload to be also transported without an actual interchangeable platform.

The use of the loading device according to the invention achieves a low installation height and a light construction. It is possible to transfer a platform horizontally to a trailer without tipping. In the device, it is possible to use tipping technology that is, as such conventional, and which includes a telescopic cylinder and a pull-down cylinder. The interchangeable platform can be raised from close to the rear of the truck. The low lifting angle permits, for example, the transportation of loose goods and material that flows easily off the platform.

It must be understood that the above description and the related figures are only intended to illustrate the present invention. Thus, the invention is not restricted to only the embodiments described above, instead many different variations and adaptations of the invention are possible within the scope defined in the accompanying Claims.

## Claims

1. A loading device for trucks (16), which includes interchangeable-platform devices, fitted to the chassis (16.1) of the truck (16), for pulling an interchangeable platform (17) onto the truck (16) and for removing it from on top of the truck (16), and further including a cradle (12) moveable in guides (10.2) fitted to the frame (10) of the loading device, an L-arm (13) with a hook (13.1), pivoted to the cradle (12) and driven by an operating device (13.2), and a cradle (12) transfer device (14), which is attached at one end to the frame (10) of the loading device and at the opposite end to the cradle (12), which the transfer device (14) drives over the transfer length, which transfer device (14) include
- a first hydraulic cylinder (15), which includes components that move in opposite directions, i.e. a piston rod (15.1) and a cylinder (15), and which is attached by one component to one end (10.1) of the said transfer device (14) and
- second hydraulic cylinder devices (23), which include components that move in opposite directions, i.e. a piston rod (23.1) and a cylinder (23), which is attached by one end (23) to the second component (15) of the first cylinder (15), and which is attached by the opposite component (23.1) to the opposite end (12.4) of the transfer device (14), and in which
- the first hydraulic cylinder (15) and the second hydraulic cylinder devices (23) are arranged to form two parts of the transfer device (14), one of which parts (23) has an essentially shorter stroke than the other part (15), and in which they are together arranged to cover the entire transfer length,
**characterized in that**
- the second hydraulic cylinder devices include a pair of hydraulic cylinders, comprising two hydraulic cylinders (23), each of which are attached symmetrically in connection with the first hydraulic cylinder (15) being on both sides of it in a plane of the frame (10) of the loading device and
- the cradle (12) has a closed cross-sectional profile.

2. A loading device according to Claim 1, **characterized in that** the said pair of hydraulic cylinders (23) is arranged as the part of the said transfer device (14) that has the said shorter stroke.

3. A loading device according to Claim 1 or 2, **characterized in that** the cylinders (15, 23) are fitted to the device in such a way that they pull the interchangeable platform (17) onto the truck (16).

4. A loading device according to any of Claims 1 - 3, **characterized in that** a telescopic extension arm (13.3) is fitted to the L-arm (13).

5. A loading device according to Claim 4, **characterized in that** a coating is arranged on the L-arm (13) and/or on its telescopic extension arm (13.3), in order to reduce the friction between them.

6. A loading device according to any of Claims 1 - 5, **characterized in that** the cradle (12) includes carrier rollers (12.1) fitted to the said guides (10.2).

7. A loading device according to any of Claims 1 - 6, in which there is also a tipping frame (10, 11) fitted to the chassis (16.1) of the truck (16), in connection with which the said transfer devices are arranged for pulling the interchangeable platform (17) onto the tipping frame (10, 11) and for removing it from the frame, and in which a pushing hydraulic-cylinder arrangement (11.1, 11.2) is fitted between the chassis (16.1) of the truck (16) and the tipping frame (10, 11), at least to raise the tipping frame (10, 11), **characterized in that** the said hydraulic-cylinder arrangement includes a telescopic lifting cylinder.

8. A loading device according to any of Claims 1 - 7, **characterized in that** elements (10.4) are arranged in connection with the front end of the frame (10, 11) of the loading device, for locking the L-arm (13) in place.

## Patentansprüche

1. Für Lastkraftwagen (16) bestimmte Ladeanlage, die am Chassis (16.1) des Lastwagens (16) anzuordnende zum Aufziehen der Wechselpritsche (17) auf den Lastwagen (16) und Absetzen der Wechselpritsche (17) von dem Lastwagen (16) dienende Wechselpritschenvorrichtungen aufweist, und weiter einen in Führungen (10.2) am Rahmen (10) der Ladeanlage beweglichen Schlitten (12), einen an den Schlitten (12) angelenkten (13.8) und mit einer Betätigungsvorrichtung (13.2) zu betätigenden L-Schenkel (13) mit Haken (13.1) sowie eine Transportvorrichtung (14) für den Schlitten (12), die mit ihrem einem Ende am Rahmen (10) der Ladeanlage und mit ihrem entgegengesetzten Ende an dem Schlitten (12) befestigt ist, der von der Transportvorrichtung (14) über die Transportlänge angetrieben wird, umfasst, wobei die Transportvorrichtung (14)
- einen ersten Hydraulikzylinder (15), der in einander entgegengesetzten Richtungen zueinander bewegliche Teile, nämlich eine Kolbenstange (15.1) und einen Zylinder (15) hat, und der mit seinem einen Teil an dem einen Ende (10.1) der besagten Transportvorrichtung (14) befestigt ist, und
- zweite Hydraulikzylindermittel (23), die in einander entgegengesetzten Richtungen bewegliche Teile, nämlich eine Kolbenstange (23.1) und einen Zylinder (23) aufweisen, die mit ihrem einen Teil (23) am zweiten Teil (15) des ersten Zylinders (15) befestigt sind und mit ihrem entgegengesetzten Teil (23.1) am entgegengesetzten Ende (12.4) der Transportvorrichtung (14) befestigt sind, umfassen, und
- der erste Hydraulikzylinder (15) und die zweiten Hydraulikzylindermittel (23) dazu eingerichtet sind, zwei Teile der Transportvorrichtung (14) zu bilden, von denen das eine Teil (23) eine wesentlich kürzere Hublänge als das andere Teil (15) hat, wobei sie so eingerichtet sind, dass sie zusammen die gesamte Transportlänge decken,
**dadurch gekennzeichnet, dass**
- die zweiten Hydraulikzylindermittel aus einem Hydraulikzylinderpaar bestehen, das zwei Hydraulikzylinder (23) umfasst, die beide symmetrisch mit dem ersten Hydraulikzylinder (15) verbunden sind und sich beiderseits desselben in der Ebene des Rahmens (10) der Ladeanlage befinden, und
- der Schlitten (12) ein geschlossenes Querschnittsprofil hat.

2. Ladeanlage nach Anspruch 1, **dadurch gekennzeichnet, dass** das besagte Hydraulikzylinderpaar (23) jener Teil der besagten Transportvorrichtung (14) angeordnet ist, das die besagte kürzere Hublänge hat.

3. Ladeanlage nach Anspruch 1 oder 2, **dadurch gekennzeichnet, dass** die Zylinder (15, 23) so an der Anlage angeordnet sind, dass sie die Wechselpritsche (17) auf den Lastwagen (16) ziehen.

4. Ladeanlage nach irgendeinem der Ansprüche 1 bis 3, **dadurch gekennzeichnet, dass** der L-Schenkel (13) ein teleskopisches Verlängerungsteil (13.3) hat.

5. Ladeanlage nach Anspruch 4, **dadurch gekennzeichnet, dass** der L-Schenkel (13) und/oder dessen teleskopisches Verlängerungsteil (13.3) eine Beschichtung zur Verringerung ihrer gegenseitigen Reibung haben.

6. Ladeanlage nach irgendeinem der Ansprüche 1 bis 5, **dadurch gekennzeichnet, dass** das zu dem Schlitten (12) zu den besagten Führungen (10.2) passende Tragrollen (12.1) gehören.

7. Ladeanlage nach irgendeinem der Ansprüche 1 bis 6, bei der am Chassis (16.1) des Lastwagens (16) zusätzlich ein Kipprahmen (10, 11) angeordnet ist, an dem die besagten Wechselpritschenvorrichtungen zum Ziehen der Wechselpritsche (17) auf den Kipprahmen (10, 11) und zum Absetzen derselben von dem Kipprahmen angeordnet sind, und bei der zwischen dem Chassis (16.1) des Lastwagens (16) und dem Kipprahmen (10, 11) eine schiebende Hydraulikzylinderanordnung (11.1, 11.2) wenigstens zum Heben des Kipprahmen (10, 11) angeordnet ist, **dadurch gekennzeichnet, dass** zu der besagten Hydraulikzylinderanordnung ein teleskopischer Hubzylinder gehört.

8. Ladeanlage nach irgendeinem der Ansprüche 1 bis 7, **dadurch gekennzeichnet, dass** am vorderen Ende des Rahmens (10, 11) der Ladeanlage Elemente (10.4) zum Verriegeln des L-Schenkels (13) an seiner Stelle angeordnet sind.

## Revendications

1. Dispositif de chargement pour les camions (16), qui comprend des plateformes interchangeables qui sont disposées sur le cadre (16.1) du camion (16) pour tirer une plateforme interchangeable (17) sur le camion (16) et pour l'enlever du camion (16), et qui comprend encore un berceau (12) déplaçable dans des guides (10.2) attachés au cadre (10) du dispositif de chargement, un bras en L (13) avec un crochet (13.1) monté par pivot (13.8) au berceau (12) et commandé par un dispositif de manoeuvre (13.2) et un dispositif de transfert (14) du berceau (12), qui est attaché par une extrémité au cadre (10) du dispositif de chargement et à l'extrémité opposée au berceau (12), que le dispositif de transfert (14) déplace sur la longueur de transfert, lequel dispositif de transfert (14) comprend
- un premier cylindre hydraulique (15), qui comprend des composants qui se déplacent dans des directions opposées, c'est-à-dire une tige de piston (15.1) et un cylindre (15), et qui est attaché par un composant à une extrémité (10.1) dudit dispositif de transfert (14), et
- d'autres dispositifs de cylindres hydrauliques (23), qui comprennent des composants qui se déplacent dans des directions opposées, c'est-à-dire une tige de piston (23.1) et un cylindre (23), qui sont attachés par un composant (23) à la deuxième extrémité (15) du premier cylindre (15), et qui sont attachés par le composant opposé (23.1) à l'extrémité opposée (12.4) du dispositif de transfert (14), et dans lequel
- le premier cylindre hydraulique (15) et les autres dispositifs de cylindres hydrauliques (23) sont disposés de sorte à former deux composants du dispositif de transfert (14), un desquels composants (23) ayant une course de piston essentiellement plus courte que l'autre composant (15), et dans lequel ils sont disposés de sorte à couvrir ensemble toute la longueur de transfert,
**caractérisé en ce que**
- les autres dispositifs de cylindres hydrauliques comprennent une paire de cylindres hydrauliques qui comprend deux cylindres hydrauliques (23), chacun des deux étant attaché de manière symétrique en liaison avec et de chaque côté du premier cylindre hydraulique (15) dans le plan du cadre (10) du dispositif de transfert
- le berceau (12) a un profil de section transversale fermé.

2. Dispositif de chargement selon la revendication 1, **caractérisé en ce que** ladite paire de cylindres hydrauliques (23) est disposée pour former la partie dudit dispositif de transfert (14) dont ladite course de piston est plus courte.

3. Dispositif de chargement selon la revendication 1 ou 2, **caractérisé en ce que** les cylindres (15, 23) sont disposés dans le dispositif de sorte à tirer la plateforme interchangeable (17) sur le camion (16).

4. Dispositif de chargement selon l'une quelconque des revendications 1 à 3, **caractérisé en ce qu'**un bras d'extension télescopique (13.3) est attaché au bras en L (13).

5. Dispositif de chargement selon la revendication 4, **caractérisé en ce qu'**un revêtement est disposé sur le bras en L (13) et/ou sur son bras d'extension télescopique (13.3) pour diminuer la friction entre eux.

6. Dispositif de chargement selon l'une quelconque des revendications 1 à 5, **caractérisé en ce que** le berceau (12) comprend des rouleaux de support (12.1) attachés auxdits guides (10.2).

7. Dispositif de chargement selon l'une quelconque des revendications 1 à 6, où un cadre basculant (10, 11) est également installé sur le cadre (16.1) du camion (16), en liaison avec lequel sont disposés lesdits dispositifs de transfert pour tirer la plateforme (17) sur le cadre basculant (10, 11) et pour l'enlever de là, et où un dispositif de cylindres hydrauliques de poussée (11.1, 11.2) est disposé entre le cadre (16.1) et le cadre basculant (10, 11) du camion (16) pour soulever au moins le cadre basculant (10, 11), **caractérisé en ce que** ledit dispositif de cylindres hydrauliques comprend un cylindre de levage télescopique.

8. Dispositif de chargement selon l'une quelconque des revendications 1 à 7, **caractérisé en ce que** des éléments (10.4) sont disposés en liaison avec l'extrémité avant du cadre (10, 11) du dispositif de chargement pour immobiliser le bras en L (13).
